# EUROPÄISCHE PATENTSCHRIFT

(11) **EP 2 114 733 B1**
(45) Veröffentlichungstag und Bekanntmachung des Hinweises auf die Patenterteilung: **16.07.2014**
(21) Anmeldenummer: 08715471.2
(22) Anmeldetag: 07.02.2008
(51) Int. Cl.: B60R 21/201, B60R 21/2338, B60R 21/231, B60R 21/207

(54) **AIRBAGSYSTEM, FAHRZEUGSITZ MIT EINEM AIRBAGSYSTEM SOWIE AUSLÖSEVERFAHREN FÜR EIN AIRBAGSYSTEM**
AIRBAG SYSTEM, VEHICLE SEAT COMPRISING AN AIRBAG SYSTEM, AND DEPLOYMENT METHOD FOR AN AIRBAG SYSTEM
ENSEMBLE SAC GONFLABLE, SIÈGE DE VÉHICULE ÉQUIPÉ D'UN ENSEMBLE SAC GONFLABLE ET PROCÉDÉ DE DÉCLENCHEMENT D'UN ENSEMBLE SAC GONFLABLE

(30) Priorität: 07.02.2007 DE 202007002038 U; 21.02.2007 DE 202007002716 U
(43) Veröffentlichungstag der Anmeldung: 11.11.2009
(73) Patentinhaber: Inova GmbH Technische Entwicklungen, 65428 Rüsselsheim (DE)
(72) Erfinder: MÜLLER, Helmut, 65428 Rüsselsheim (DE)
(74) Vertreter: Lindner, Manfred Klaus
(86) Internationale Anmeldenummer: PCT/DE2008/000238
(87) Internationale Veröffentlichungsnummer: WO 2008/095485

(56) Entgegenhaltungen:
- EP-A- 0 782 944
- EP-A- 1 069 004
- WO-A-2005/102789
- JP-A- 9 071 205
- JP-A- 10 310 017

## Beschreibung

Die Erfindung betrifft ein Airbagsystem nach dem Oberbegriff des Anspruchs 1, einen Fahrzeugsitz mit einem Airbagsystem sowie ein Auslöseverfahren für ein Airbagsystem.

Die Anwendung der Erfindung betrifft Land-, Luft- und Wasserfahrzeuge, auch wenn nachfolgend exemplarisch auf einen Fahrzeugsitz eines Kraftfahrzeuges Bezug genommen wird. Vor allem Automobilsitze, wie vorstehend angegeben aber auch Sitze in anderen Fahrzeugarten, erhalten und enthalten immer mehr Sicherheitsausrüstung und -funktionen. Insbesondere Thoraxairbags werden in solche Sitze als Airbagsystem integriert.

Basierend auf der grundsätzlichen der Technologie gemäß der Patentanmeldung DE 198 60 840 A1 und dem dazu parallelen US-amerikanischen Patent US 6,299,197 sowie der PCT-Anmeldung WO 2005/102789 A1 jeweils vom selben ursprünglichen Anmelder zum Thema "Laufmaschenöffnung" bei Airbags, die mit genähtem Textil o.ä. abgedeckt sind, beschäftigt sich diese Erfindung mit Ergänzungen und weiteren Alternativen zur PCT-Anmeldung WO 2007/042411A2, ebenfalls vom selben ursprünglichen Anmelder, betreffend insbesondere eine in der Massenproduktion sicheren Montage speziell des Reißbandes und den Auswirkung davon auf das gesamte System, weiter verbesserte Ausgestaltungen zum sicheren Austritt eines Airbags durch einen Sitzbezug hindurch. Insofern ist der vollständige Offenbarungsgehalt dieser älteren Anmeldungen insbesondere hinsichtlich der Bauart der Airbagvorrichtung und deren Montage- und Betriebsverfahren zur Vermeidung bloßer Wiederholungen hiermit durch die Bezugnahmen vollumfänglich in die vorliegenden Unterlagen aufgenommen.

Zusammengefasst zeigen die vorstehend genannten vorausgehenden Anmeldungen ein Reißmittel, wie beispielsweise ein Band, einen Faden oder dergleichen, das mit einer vorgesehenen Durchtrittsnaht für den Airbag vernäht ist. Durch verschiedenartige "Umlenkungen" wird das Reißmittel/Band so montiert, dass der Airbag zu Beginn seiner Entfaltung eine Belastung aufbringt, die mit dem Reißmittel eine Laufmasche bzw. ein Loch in die geplante Aufreißnaht reißt. Danach ist der sich weiter entfaltende Airbagt leicht in der Lage, die Reißnaht weiter zu öffnen. Das System funktioniert besser als alle anderen Systeme und ist im Ergebnis unabhängig von der Nahtart und Stoffqualität.

Aus der JP 09 071205 A ist ein Airbagsystem mit einem Airbagmodul bekannt, das eine Öffnungstechnik einer Aufreißnaht eines Sitzbezuges für einen unter dem Sitzbezug nicht sichtbar untergebrachten Airbag enthält, wobei die Öffnungstechnik derart gestaltet ist, dass die Entfaltungskraft des Airbags (214) ein Loch oder Löcher in die Aufreißnaht reißt, die entsprechend der Physik der "Laufmasche" ein leichtes Öffnen der Aufreißnaht bewirkdbewirken, und wobei ein in die Aufreißnaht des Sitzbezuges beigenähtes Band oder mehrere Bänder oder Bandenden an mehr als einer Stelle und angetrieben durch die Entfaltungskraft des Airbags aus der Aufreißnaht heraus gerissen wird bzw. werden. Ein solches Airbagsystem ist auch aus der EP 0 782 944 A1 bekannt

Die heute im Übrigen im Einsatz befindliche Technik hat das Problem der sich schwer öffnenden Nähte anders gelöst. Die Nähte werden geschwächt und bedürfen in Verbindung mit dehnungsweichen Materialien dehnungsarme, zusätzlich eingenähte Manschetten: Das alles ist sehr fertigungs- und materialsensibel. Aufwendige Überwachungsprüfungen sind notwendig.

Die vorliegende Erfindung hat und erreicht das Ziel, die vorbekannte und frühere Technologie durch Weiterbildungen und Alternativen weiter zu verbessern.

Die Erfindung schafft damit ein Airbagsystem nach dem Anspruch 1.

Die vorliegend geschaffene spezifische Ausführung lässt beispielsweise das an z.B. zwei Stellen beigenähte eine Band entsprechend zwei Löcher reißen, was besonders vorteilhaft für einen "doppelten" so genannten Pelvis-Thoraxbag ist. Das Band/Die Bänder ist/sind somit an mehr als einer Stelle beigenäht.

Vorzugsweise ist das Bendende bzw. sind die Bandenden die eine Seite einer Schlaufe, die um das Airbagmodul gelegt ist.

Weiterhin kann mit Vorzug vorgesehen sein, dass die Bandschlaufe am Ende mit einem Gleitring versehen ist, durch den das auszureißende Band bzw. die auszureißenden Bandenden durchgesteckt ist/sind.

In weiterer Ausgestaltung ist das Bandende bzw. sind die Bandenden so positioniert, dass ein "Abschälen" des Bandendes/der Bandenden entsteht. Hierzu ist eine geringere Kraft erforderlich als bei "stumpfem" Abreißen.

Eine weitere bevorzugte Ausgestaltung liegt darin, dass die Airbagfaltung(en) derart ausgeführt ist/sind, dass die erste Entfaltung mit ihrer Kraft auf die Öffnung des Reißbandes gerichtet ist. Dies kann dadurch weitergebildet sein, dass die Airbagfaltung(en) derart ausgeführt ist/sind, dass außerdem eine gezielte Entfaltungsrichtung und -geschwindigkeit erreicht wird.

Es kann ferner mit Vorzug vorgesehen sein, dass ein oder ggf. das Reißbandöffnungssystem derart gestaltet ist, dass die Reißbänder mit der Airbagaufreißnaht vernäht sind. Alternativ oder zusätzlich kann vorzugsweise ein oder ggf. das Reißbandöffnungssystem in der Funktion derart ausgeführt sein, dass bei der Entfaltung des Airbags die Reißbänder unter Last gebracht werden und damit die Löcher in der Aufreißnaht zum Zweck des schnellen und kraftarmen Austritts des Airbags aufreißen.

Durch die Erfindung werden ferner ein Fahrzeugsitz mit einem solchen Airbagsystem und Auslöseverfahren für ein solches Airbagsystem geschaffen. Ferner schafft die Erfindung geeignete Auslöseverfahren für ein solches Airbagsystem.

Bevorzugte und/oder vorteilhafte Ausgestaltungen der Erfindung ergeben sich aus den Ansprüchen und deren Kombinationen sowie den gesamten vorliegenden Anmeldungsunterlagen.

Die Erfindung wird anhand von Ausführungsbeispielen nachfolgend unter Bezugnahme auf die Zeichnungen lediglich exemplarisch näher erläutert, in denen
- Fig. 1: in einer schematischen Seitenansicht einen Airbag eines Ausführungsbeispiels der Erfindung verdeutlicht,
- Fig. 2: in einer schematischen teilweise geschnittenen Seitenansicht ein Ausführungsbeispiel eines Fahrzeugsitzes mit einem Airbagmodul eines Airbagsystems der Erfindung verdeutlicht,
- Fig. 3: in einer schematischen Ansicht ein Ausführungsbeispiel eines Reißbandes eines Airbagsystems der Erfindung verdeutlicht,
- Fig. 4: in jeweils schematischen Darstellungen A bis G verschiedene Ausführungsbeispiele von Faltungen eines Airbags eines Airbagsystems der Erfindung verdeutlicht,
- Fig. 5: in einer schematischen Seitenansicht ein Ausführugnsbeispiel eines Rückenlehnenteils eines Fahrzeugsitzes mit einem Airbagsystem der Erfindung verdeutlicht,
- Fig. 6: in einer schematischen Ansicht ein Detail eines weiteren Ausführungsbeispiels eines Airbagsystems der Erfindung verdeutlicht,
- Fig. 7: in einer schematischen Ansicht ein Prinzipdetail des Ausführungsbeispiels eines Airbagsystems gemäß der Fig. 6 verdeutlicht,
- Fig. 8: in einer schematischen und teilweise geschnittenen Ansicht ein Detail einer Alternative des Ausführungsbeispiels eines Airbagsystems gemäß der Fig. 6 verdeutlicht, und
- Fig. 9: in einer schematischen und teilweise geschnittenen Ansicht ein weiteres Ausführungsbeispiel des Airbagsystems verdeutlicht.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele oder auf die jeweiligen Merkmalskombinationen innerhalb einzelner Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Ferner ist die Bezugszeichenliste am Ende dieser Beschreibung explizit Bestandteil dieser Beschreibung.

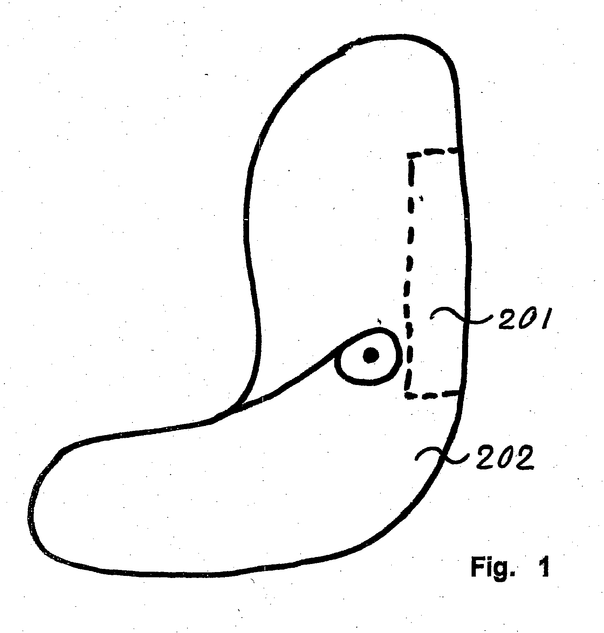

Die Fig. 1 zeigt einen mehr und mehr verbreiteten Zweikammerbag 201 mit einem unteren Bag 202 zur festeren Abstützung am Becken mit mehr Druck. Auch ist es von Vorteil, dass der untere Bag 202 früh austritt. Der Mensch ist, wie bekannt ist, am Becken am breitesten und der häufigste Eintritt eines Unfallgegners ist unten.

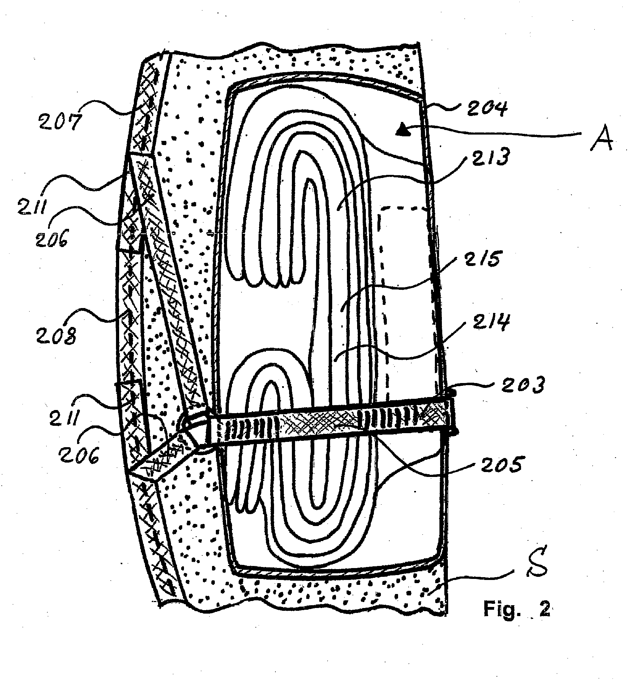

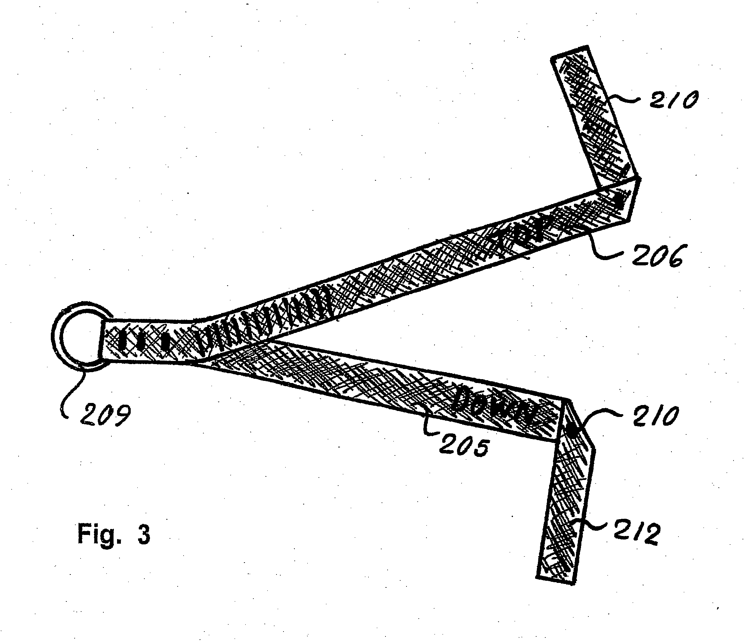

Um diesen unteren Bag 202 möglichst schnell austreten zu lassen, wird, wie in der Fig. 2 in der ausschnittweisen schematischen und teilweise geöffneten Darstellung eines Lehnenteils eines Sitzes S gezeigt ist, eine Reißbandschlaufe 203, wie sie in zahlreichen Ausführungsformen auch in den eingangs angegebenen älteren Anmeldungen gezeigt und erläutert ist, um den zusammen gefalteten Zweikammerbag 201 bzw. um dessen Behälter 204 gelegt, der stellvertretend auch das Airbagmodul A symbolisiert. Das Band 205 wird, wie in der Fig. 3 gezeigt ist, in zwei Schenkel 206 aufgeteilt, die, wie in der Fig. 2 gezeigt ist, am Sitzbezug 207 zu einer Aufreißnaht 208 an den Stellen beigenäht werden, an denen die Hälften des Zweikammerbags 201 austreten sollen. Selbstverständlich kann der Zweikammerbag 201 auch ein Einkammerbag (nicht gezeigt) sein, der durch diese Technik schneller austreten kann.

Für eine gut gleitende Umlenkung der Schenkel 206 des Bandes 205 ist ein Umlenkring 209, wie in der Fig. 3 gezeigt ist, zwischen die beiden Schenkel 206 des Bandes 205 eingelegt. Durch diese Anordnung ist keine Vernähung des Bandes 205 als Vorzusammenbau nötig.

Das Band 205 wird als Vorzusammenbau mit dem Umlenkring und den Abwinkelungen 210 z.B. verschweißt oder mit anderen üblichen Techniken verbunden.

Die Beinähung 211 wird, wie in der Fig. 2 gezeigt ist, so ausgeführt, dass sich die Bandenden 212 abschälen. Hierdurch wird die Aufreißnaht 208 leichter und damit schneller aufgerissen.

Eine weitere Optimierung des Airbagsystems ist möglich, indem ein Airbag 214 eine spezielle Faltung 213 erhält. Eine Grundfaltung 215 wird oben und unten um 180 Grad abgeknickt, um das Gas mittig zu behalten, damit der Airbag 214 zuerst konzentriert auf die Reißbandschlaufe 203 einwirkt und dann nach vorne austritt.

Der untere Bag 202 ist nochmals nach 180 Grad nach unten abgeknickt. Versuche haben ergeben, dass sich hierdurch der untere Bag 202 schräg nach unten entfaltet. Dies ist vorteilhaft, um durch eine frühzeitige breite Entfaltung in vertikaler Richtung die Aggressivität der Entfaltung zu reduzieren.

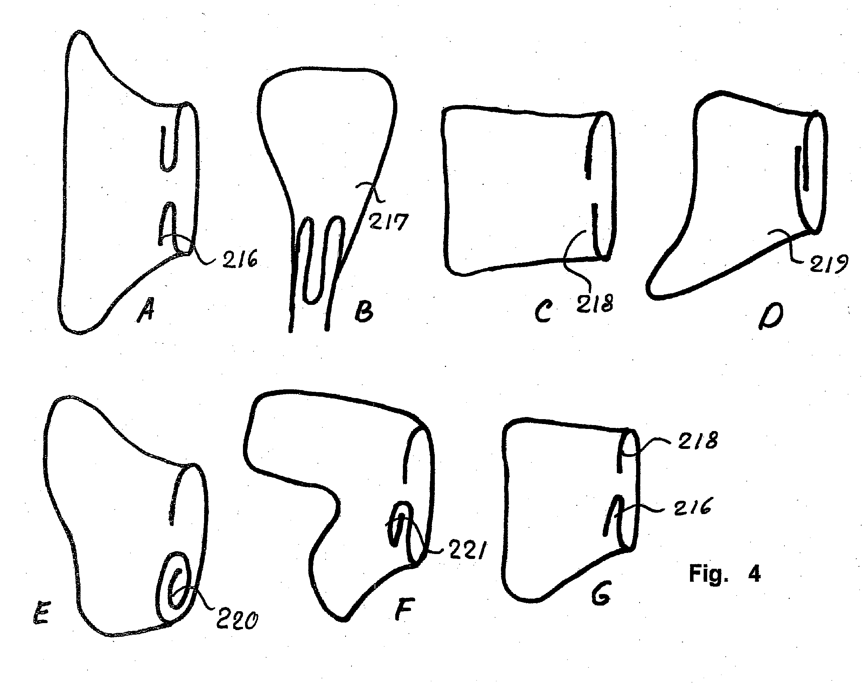

Weitere Faltungen zur gezielten Veränderung der Ausbreitung des Airbags 214 sind in der Fig. 4 gezeigt. Die Ausführung A mit "doppelter" 180 Grad Faltung ergibt eine gezielte schnelle Ausbreitung des Airbags 214 nach oben und unten. Die Ausführung B zeigt eine Stülpfaltung 217, hier als gezielte Faltung nach oben. Die Ausführung C mit einer 180 Grad Faltung 218 erzwingt eine schnelle Entfaltung nach vom. Die Ausführung D zeigt eine 180 Grad Faltung 218 mit erzwungener Erstentfaltung 219 des unteren Bags 202. Bei der Ausführung E entfaltet sich der obere Bag schnell nach vorn; das Unterteil wird durch eine Rollfaltung 220 verzögert und durch die Rollfaltung nach "innen" zur horizontalen Entfaltung gezwungen. Die Ausführung F zeigt eine untere umgekehrte Rollfaltung nach außen; dies führt als Rollfaltung 221 zu einer Verzögerung und durch deren Wickelrichtung zu einer Entfaltung des Airbags 214 nach unten. Die Ausführung G zeigt unten eine 180 Grad Doppelfaltung 216 und damit eine mittelmäßig nach unten gerichtete schnelle Entfaltung. Zusammengefasst zeigen diese Beispiele, wie man mit der Faltungsart die Entfaltungsrichtung und Geschwindigkeit vorgeben kann.

Die Fig. 2 zeigt dazu einen gesamten Airbag 202, der entsprechend der gezeigten Darstellung gefaltet ist. Hierdurch wird bewirkt, dass der gesamte Airbag 202 nach vorne austritt und die Reißbandschlaufe 203 aktiviert wird. Die Abknickungen 204 des Airbags 202 oben und unten verhindert eine Ausbreitung des Gases nach oben bzw. unten.

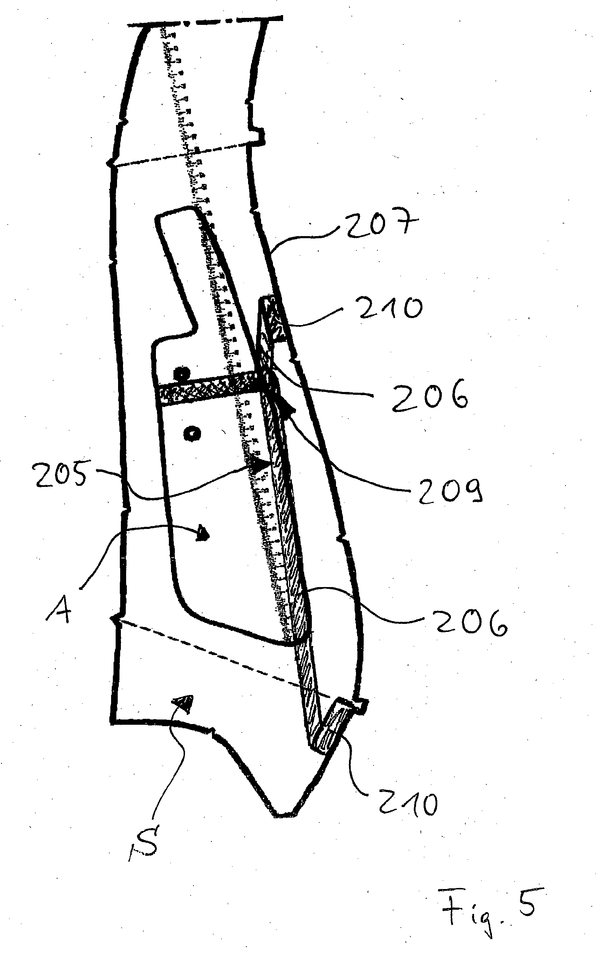

Die Fig. 5 verdeutlicht in einer schematischen Seitenansicht ein Ausführugnsbeispiel eines Rückenlehnenteils eines Fahrzeugsitzes mit einem Airbagsystem der Erfindung.

Zwar ist bei den vorstehenden Ausführungsbeispielen auf eine Öffnungstechnik Bezug genommen worden, die die Airbagaufreißnaht eines Sitzbezuges an zwei getrennten Stellen aufreißen lässt, jedoch ist die vorliegende Erfindung nicht auf diese Ausgestaltung beschränkt, sondern kann eine beliebige nach den übrigen Gegenbenheiten und Anforderungen festgelegte Mehrzahl und Aufreißstellen vorgesehen und mit Bändern oder Bandenden versehen sein.

Somit schafft die Erfindung ein Airbagsystem, einen Fahrzeugsitz damit und ein Auslöseverfahren dafür, mit einer Öffnungstechnik der Airbagaufreißnaht eines Sitzbezuges für den unter dem Bezug nicht sichtbar untergebrachten Airbag. Die Öffnungstechnik ist derart gestaltet, dass die Entfaltungskraft des Airbags ein Loch oder Löcher in die Aufreißnaht reißt, die entsprechend der Physik der "Laufmasche" ein leichtes Öffnen der Naht bewirken. Weiter ist die Öffnungstechnik derart ausgeführt, dass ein in die Airbagaufreißnaht des Sitzbezuges beigenähtes Band oder mehrere Bänder bzw. Bandenden aus der Naht heraus gerissen wird bzw. werden, was angetrieben durch die Entfaltungskraft des Airbags erfolgt. Insbesondere kann bei dieser Öffnungstechnik das Bendende bzw. können die Bandenden die eine Seite einer Schlaufe sein, das/die um das Airbagmodul gelegt ist/sind. Die vorliegend geschaffene spezifische Ausführung lässt beispielsweise das an zwei Stellen beigenähte eine Band zwei Löcher reißen, was besonders vorteilhaft für einen "doppelten" so genannten Pelvis-Thoraxbag ist. Das Band/Die Bänder ist/sind somit erfindungsgemäß an mehr als einer Stelle beigenäht, so dass der Sitzbezug an entsprechend mehreren, wie beispielsweise zwei getrennten Stellen aufreißt und den Airbag sicher und gezielt austreten lässt. Durch die Position des Reißbandes / der Reißbänder kann man den Entfaltungsbeginn beeinflussen. Verschiedene Stoffdehnungen haben keinen Einfluss auf die Funktionssicherheit des Airbagsystems (eine größere Dehnung ist kostengünstiger und ist leichter zu verarbeiten).

Die Bandschlaufe kann am Ende mit einem Gleitring versehen sein, durch den das auszureißende Band bzw. die auszureißenden Bandenden durchgesteckt ist/sind. Bevorzugt wird das Bandende bzw. werden die Bandenden so positioniert, dass ein "Abschälen" des Bandendes/der Bandenden entsteht, wozu eine geringere Kraft erforderlich ist als bei "stumpfem" Abreißen.

Weiterhin ist die Airbagfaltung oder sind die Airbagfaltungen derart ausgeführt, dass die erste Entfaltung mit ihrer Kraft auf die Öffnung des Reißbandes gerichtet ist. Dabei ist ferner bevorzugt, dass die Airbagfaltung oder die Airbagfaltungen derart ausgeführt ist/sind, dass außerdem eine gezielte Entfaltungsrichtung und -geschwindigkeit erreicht wird.

Die erfindungsgemäßen Ausgestaltungen führen zu einer Reihe von Vorteilen.

Heute wird die Airbagaufreißnaht üblicherweise geschwächt und muss deshalb laufend überprüft werden, um die Balance zwischen Gebrauchsfestigkeit und leichtem Öffnen zu garantieren. Das ist erforderlich, weil der Bag simultan viele Nähstiche öffnen muss. Weiter ist die Umgebung der Aufreißnaht mit einer Manschette verstärkt, um die Dehnung der Bezugsstoffe zu eliminieren. Die erfindungsgemäße Ausgestaltung der Reißbandtechnik braucht keine oder eine nur geringfügig geschwächte Aufreißnaht, da der Airbag systembedingt nur wenige Stiche zerreißen muss. Der Stoff muss nicht verstärkt werden, da die Bandschlaufe den Reißvorgang gegenläufig zur Airbagentfaltung ausführt. Weiter kann durch die Annähstelle(n) die Airbagaustrittsstelle beeinflusst werden. Gezielt ausgeführte Faltungen des Airbags unterstützen ferner die Reißbandtechnik und gleichzeitig die Entfaltungsrichtung und Geschwindigkeit.

Besonders vorteilhaft ist die Erfindung für die Schaffung von Airbagsystemen mit größerer Höhe als bisherige Systeme. Dies betrifft insbesondere zweigeteilte Airbags oder sogenannte Zweikammem- oder Zweizonen-Airbags, oder allgemein mehrteilige Airbagkonstruktionen.

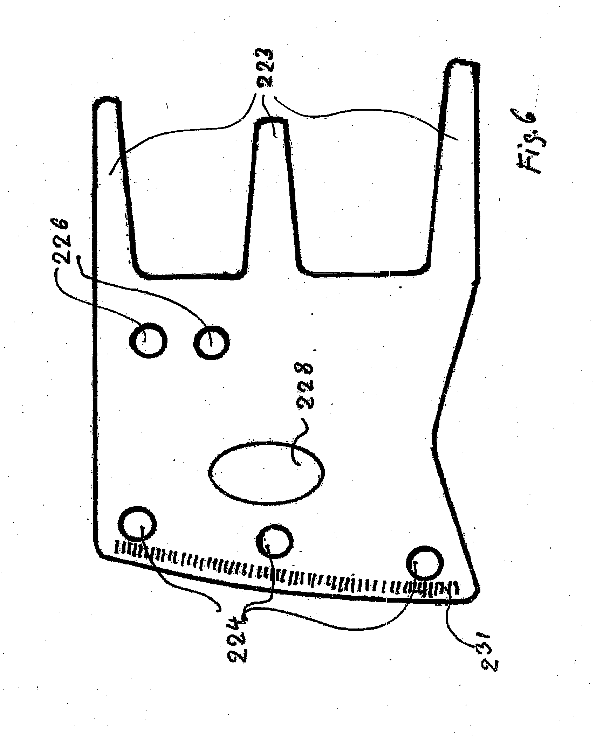

Eine weitere Alternative der Reißbandtechnik ist ein Gewebe 222, wie in der Fig. 6 gezeigt ist. Dieses Gewebe 222 ist so ausgeschnitten, dass auf einer Seite drei Reißbänder 223 entstehen. Hier sind drei Reißbänder gezeigt. Es kann auch eine beliebige andere Zahl sein, beginnend mit 1. Das hängt von der Auslegung des Airbags 214 und der Art des Sitzbezuges 207 ab.

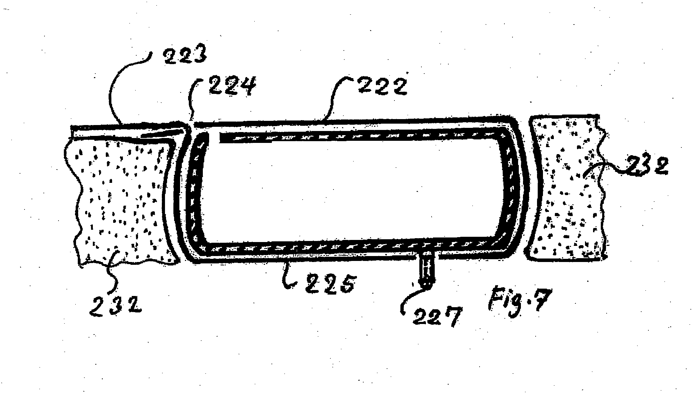

Auf der Gegenseite des Gewebes 222 sind in diesem Beispiel drei Löcher 224 angebracht. Durch diese Löcher 224 werden die Reißbänder 223 durchgesteckt und dann zur Aufreißnaht 208 beigenäht. In diese sozusagen "offene" Manschette 225 wird das Airbagmodul A eingeschoben und dann bei der Montage straff gezogen und damit in eine vorbestimmte Position gebracht. Weitere zwei Löcher 226 dienen dem Durchgang von Anschraubbolzen 227 des Airbagmoduls A. In der Fig. 7 ist das Prinzip gezeigt.

Vorteil dieser Alternative ist, dass ohne zusätzlichen Montageaufwand beliebig viele Reißbänder 223 verwendet werden können. Das ist besodners vorteilhaft bei mehrteiligen Airbags 214. Weiter lassen mehrere Schwächungen der Aufreißnaht eine festere Naht zu. Mehrere und damit kürzere Reißbänder 223 entfernen sich früher vom sich entfaltenden Airbag 214. Heute übliche Manschetten verstärken lediglich den Sitzbezug und minimieren dessen Dehnung. Die hier beschriebene Manschette 225 mit ihren integrierten Reißbändern reißt in die Aufreißnaht 208 im Sinne von Laufmaschen Löcher. Das erfordert nur eine geringe Kraft und lässt damit eine wesentlich festere Airbagnaht 208 zu.

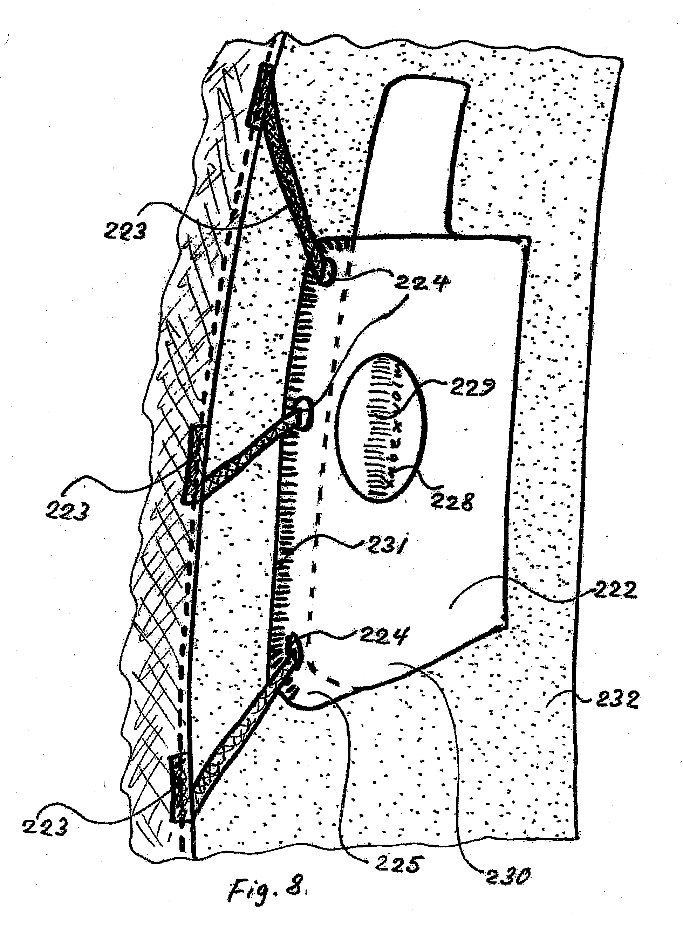

Weiter ist ein Schauloch 228 angebracht. Durch dieses wird ein Barcode 229 des Airbagmoduls 230 ablesbar (siehe Fig. 8). Ein weiterer Barcode 231 ist vor Löchern 224 angebracht. Dieser Barcode 231 wird, wie in der Fig. 8 gezeigt ist, teilweise an vorbestimmten Stellen von den Reißbändern 223 abgedeckt. Simultan zur Abfrage des Barcodes 229 des Airbagmoduls 230 durch das Schauloch 228 wird der Barcode 231 abgefragt. Es müssen die vorbestimmten Stellen des Barcodes 231 durch die Reißbänder abgedeckt sein, um eine OK - Abfrage zu erhalten.

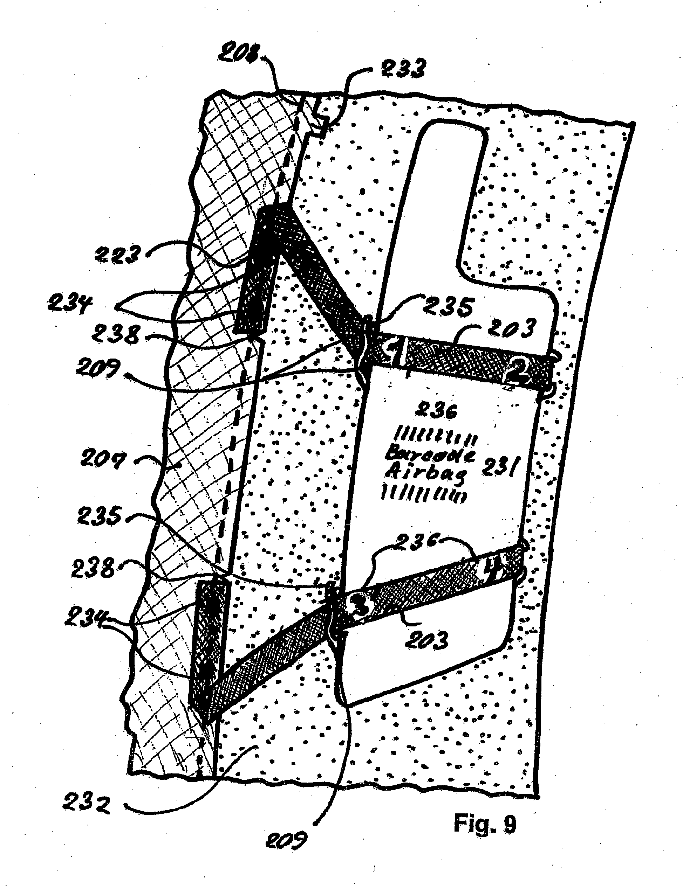

Die Fig. 9 zeigt eine weitere Anwendung der Reißbandtechnik mit 2 Reißbändern 235, die in Reißbandschlafen 203 um das Airbagmodul 230 exakt in der Lage positioniert sind. Hierzu werden die Umlenkringe 209 jeweils von oben in angespritzte, einseitig offene Klammern 235 geschoben. Auch auf der Gegenseite des Airbagmoduls 230 ist eine Einhängung 237 angespritzt. Bei korrekter Lage der Reißbandschlaufen 203 kommen auch die Lagemarkierungen 236 (in diesem Falle die Zahlen 1, 2, 3, 4) in eine vorbestimmte Lage. Diese Lage wird durch einen Fotoscanner (nicht gezeigt) nach der Montage des Airbagmoduls 230 am Lehnenrahmen (nicht gezeigt) überprüft, simultan mit dem Barcode 231 des Airbagmoduls 230.

Weiter zeigt die Fig. 9 die Sicherstellung des Annähens der Reißbänder 237 an der richtigen Stelle des Sitzbezuges 207. Hierzu wird der Sitzbezug 207 mit einem Bezugspunkt 233 versehen. Von diesem Bezugspunkt 233 bewegt sich eine rechnergesteuerte Nähmaschine, die mit einer Kontur- und Hell-Dunkel-Erkennung ausgestattet ist, auf den ersten (dunklen) Fixierpunkt 234 zu. Nur wenn dieser sich an der richtigen Stelle befindet, fährt die Maschine weiter bis zum nächsten Fixierpunkt usw. Danach wird die Abwinklungsstelle des Reißbandes 223 ebenso erfasst. Die Näherin selbst sieht die Annähposition der Reißbänder 223 an kleinen, V-förmigen Einschnitten 238. Die Nähmaschine ist außerdem so ausgeführt, dass sie nur vorwärts nähen kann.

Zusammenfassend betrifft die vorliegende Erfindung insbesondere ein Airbagsystem und speziell ein Öffnungssystem für Airbags, die aus einer vernähten Abdeckung austreten. Vorteilhaft ist dabei die erfindungsgemäße Öffnungstechnik eines Sitzbezuges zum gezielten, schnellen und problemlosen Durchtritt eines Airbags. Ein Band wird als Schlaufe um einen Airbag gelegt. Bei der Entfaltung des Bags vergrößert dieser die Schlaufe und reißt mit dem in die Airbagaufreißnaht beigenähten Band ein Loch bzw. eine Laufmasche in die Naht, und zwar erfindungsgemäß an mehr als einer Stelle. Durch diese Schwächung wird die Naht gezielt und mit wenig Kraft durch den Bag geöffnet. Eine hier gezeigte spezifische Ausführung lässt beispielsweise das an zwei Stellen beigenähte eine Band zwei Löcher reißen, was besonders vorteilhaft für einen "doppelten" so genannten Pelvis-Thoraxbag ist. Weiter sind Airbagfaltungssysteme gezeigt, die diesen Prozess unterstützen und eine gewünschte Faltrichtung und Faltgeschwindigkeit unterstützen.

Die Erfindung ist anhand der Ausführungsbeispiele in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele und deren Darstellungen in der Zeichnung entnehmen und mit seinem fachmännischen Wissen sowie dem Stand der Technik kombinieren kann. Insbesondere sind alle einzelnen Merkmale und Ausgestaltungsmöglichkeiten der Erfindung und ihrer Ausführungsvarianten kombinierbar.

### Bezeichnungen

- 201: Zweikammerbag
- 202: unterer Bag
- 203: Reißbandschlaufe
- 204: Behälter
- 205: Band
- 206: Schenkel
- 207: Sitzbezug
- 208: Aufreißnaht
- 209: Umlenkring
- 210: Abwinklung
- 211: Beinähung
- 212: Bandenden
- 213: Faltung
- 214: Airbag
- 215: Grundfaltung
- 216: doppelte 180 Grad Faltung
- 217: Stülpfaltung
- 218: 180 Grad Faltung
- 219: erzwungene Erstentfaltung
- 220: Rollfaltung
- 221: umgekehrte Rollfaltung
- 222: Gewebe
- 223: Reißbänder
- 224: Löcher
- 225: Manschette
- 226: Löcher
- 227: Anschraubbolzen
- 228: Schauloch
- 229: Barcode
- 230: Airbagmodul
- 231: Barcode
- 232: Sitzschaum
- 233: Bezugspunkt
- 234: Fixierpunkte
- 235: Klammer
- 236: Lagemarkierungen
- 237: Einhängungen
- 238: V-förmige Einschnitte
- A: Airbagmodul
- S: Sitz

## Patentansprüche

1. Airbagsystem mit einem Airbagmodul (A; 230), das eine Öffnungstechnik einer Aufreißnaht (208) eines Sitzbezuges (207) für einen unter dem Sitzbezug (207) nicht sichtbar untergebrachten Airbag (214) enthält, wobei die Öffnungstechnik derart gestaltet ist, dass die Entfaltungskraft des Airbags (214) ein Loch oder Löcher in die Aufreißnaht (208) reißt, die entsprechend der Physik der Laufmasche ein leichtes Öffnen der Aufreißnaht (208) bewirkt/bewirken, und wobei ein in die Aufreißnaht (208) des Sitzbezuges (207) beigenähtes (Beinähung 211) Band oder mehrere Bänder (205, 223) oder Bandenden (212) an mehr als einer Stelle und angetrieben durch die Entfaltungskraft des Airbags (214) aus der Aufreißnaht (208) heraus gerissen wird bzw. werden,
**dadurch gekennzeichnet,**
**dass** ein Reißbandöffnungssystem derart gestaltet ist, dass eine offene Manschette (225) um das Airbagmodul (A; 230) gelegt ist deren eine Seite zu einem oder mehreren Bändern (223) zugeschnitten ist, die als Reißbänder ausgebildet sind, und
**dass** das Reißbandöffnungssystem derart gestaltet ist, dass an der Gegenseite der offenen Manschette (225) Löcher (224) angebracht sind, durch welche die Reißbänder (223) von der gegenüberliegenden Seite durchgesteckt sind.

2. Airbagsystem nach Anspruch 1,
**dadurch gekennzeichnet,**
**dass** das in die Aufreißnaht (208) des Sitzbezuges (207) beigenähte Band oder die mehreren Bänder (205, 223) oder Bandenden (212) an zwei getrennten Stellen und angetrieben durch die Entfaltungskraft des Airbags (214) aus der Aufreißnaht (208) heraus gerissen wird bzw. werden.

3. Airbagsystem nach Anspruch 1 oder 2,
**dadurch gekennzeichnet,**
**dass** das Airbagmodul (A; 230) einen doppelten Airbag (214) oder Zweikammerbag (201) oder Pelvis-Thoraxbag enthält, der ausgelegt ist, um bei Auslösung des Airbagsystems an wenigstens zwei getrennten Stellen durch den Sitzbezug (207) auszutreten.

4. Airbagsystem nach einem der vorhergehenden Ansprüche,
**dadurch gekennzeichnet,**
**dass** das Band oder die mehreren Bänder (205) oder Bandenden (212) die eine Seite einer Reißbandschlaufe (203) ist bzw. sind, die um das Airbagmodul (A; 230) gelegt ist.

5. Airbagsystem nach Anspruch 4,
**dadurch gekennzeichnet,**
**dass** die Reißbandschlaufe (203) am Ende mit einem Gleitring versehen ist, durch den das auszureißende Band (205) bzw. die auszureißenden Bandenden (212) durchgesteckt ist/sind.

6. Airbagsystem nach einem der vorhergehenden Ansprüche,
**dadurch gekennzeichnet,**
**dass** das Band oder die mehreren Bänder (205, 223) oder Bandenden (212) so positioniert ist bzw. sind, dass ein "Abschälen" des Bandendes/der Bandenden (205, 223, 212) entsteht.

7. Airbagsystem nach einem der vorhergehenden Ansprüche,
**dadurch gekennzeichnet,**
**dass** die Faltung(en) (213) des Airbags (214) derart ausgeführt ist/sind, dass die erste Entfaltung mit ihrer Kraft auf die Öffnung des Reißbandes (205, 223) gerichtet ist.

8. Airbagsystem nach Anspruch 7,
**dadurch gekennzeichnet,**
**dass** die Faltung(en) (213) des Airbags (214) derart ausgeführt ist/sind, dass außerdem eine gezielte Entfaltungsrichtung und -geschwindigkeit erreicht wird.

9. Airbagsystem nach einem der vorhergehenden Ansprüche,
**dadurch gekennzeichnet,**
**dass** das Reißbandöffnungssystem derart gestaltet ist, dass die Reißbänder (205, 223) mit der Aufreißnaht (208) vernäht sind.

10. Airbagsystem nach einem der vorhergehenden Ansprüche,
**dadurch gekennzeichnet,**
**dass** das Reißbandöffnungssystem in der Funktion derart ausgeführt ist, dass bei der Entfaltung des Airbags (214) die Reißbänder (205, 223) unter Last gebracht werden und damit die Löcher in der Aufreißnaht (208) zum Zweck des schnellen und kraftarmen Austritts des Airbags (214) aufreißen.

11. Airbagsystem nach einem der vorhergehenden Ansprüche,
**dadurch gekennzeichnet,**
**dass** das Reißbandöffnungssystem derart gestaltet ist, dass Reißbänder (205, 223) mit Markierungen versehen sind, die von einer Nähmaschine erkannt werden können und zur Sicherstellung der richtigen Position führen.

12. Airbagsystem nach einem der vorhergehenden Ansprüche,
**dadurch gekennzeichnet,**
**dass** das Reißbandöffnungssystem derart gestaltet ist, dass Reißbänder (205, 223) mit Markierungen versehen sind, die von einem Kamerasystem erkannt werden können und mit denen die korrekte Lage der Bandschlaufen nach der Endmontage des Bandes (205, 223) sichergestellt ist.

13. Fahrzeugsitz (S), **gekennzeichnet durch** ein Airbagsystem nach einem der vorhergehenden Ansprüche.

14. Auslöseverfahren für ein Airbagsystem, wobei das Airbagsystem nach einem der Ansprüche 1 bis 13 bestimmungsgemäß oder bauartgemäß betrieben wird.

## Claims

1. Airbag system with an airbag module (A; 230) comprising an opening technique of a tearing seam (208) of a seat cover (207) for an airbag (214) invisibly accommodated under said seat cover (207), wherein said opening technique being designed such that the deployment force of said airbag (214) tears a hole or holes into said tearing seam (208) effecting an easy opening of said tearing seam (208) in correspondence with the physics of a "run", and wherein a ribbon or a plurality of ribbons (205, 223) or ribbon ends (212) stitched off (stitching 211) into said tearing seam (208) of said seat cover (207) being torn out of said tearing seam (208) at more than one position and driven by said deployment force of said airbag (214),
**characterized**
**in that** a tearing ribbon opening system being designed such that an "open" cuff (225) is laid around said airbag module (A; 230), one side of which being tailored to one or more tearing ribbons (223) which are part of the ribbons, and in that said tearing ribbon opening system being designed such that at the opposite side of said open cuff (225) there are installed holes (224) through which said tearing ribbons (223) are put through from the opposing side.

2. Airbag system according to claim 1,
**characterized**
**in that** the ribbon or plurality of ribbons (205, 223) or ribbon ends (212) stitched off (stitching 211) into said tearing seam (208) of said seat cover (207) being torn out of said tearing seam (208) at two separate positions and driven by said deployment force of said airbag (214).

3. Airbag system according to claim 1 or 2,
**characterized**
**in that** said airbag module (A; 230) comprises a double airbag (214) or a two chamber bag (201) or pelvis-thorax bag being adapted to exit through said seat cover (207) at at least two separate positions upon deployment of said airbag system.

4. Airbag system according to one of the preceding claims,
**characterized**
**in that** said ribbon or said plurality of ribbons (205, 223) or ribbon ends (212) are the one side of a tearing ribbon loop (203) being laid around said airbag module (A; 230).

5. Airbag system according to claim 4,
**characterized**
**in that** said tearing ribbon loop (203) being provided with a slide ring through which said ribbon (205) to be torn out or said ribbon ends (212) to be torn out being put through.

6. Airbag system according to one of the preceding claims,
**characterized**
**in that** said ribbon or said plurality of ribbons (205, 223) or ribbon ends (212) being positioned such that a "peeling" of said ribbon end(s) (205, 223, 212) develops.

7. Airbag system according to one of the preceding claims,
**characterized**
**in that** the folding(s) (213) of said airbag (214) being designed such that the first unfolding is directed with its force to the opening of the tearing ribbon (205, 223).

8. Airbag system according to claim 7,
**characterized**
**in that** folding(s) (213) of said airbag (214) being designed such that in addition a specific unfolding direction and velocity being reached.

9. Airbag system according to one of the preceding claims,
**characterized**
**in that** said tearing ribbon opening system being designed such that said tearing ribbons (205, 223) are sewn with said tearing seam (208).

10. Airbag system according to one of the preceding claims,
**characterized**
**in that** said tearing ribbon opening system being designed in its function such that with the deployment of said airbag (214) said tearing ribbons (205, 223) being brought under load and therewith said holes in said tearing seam (208) being torn open for the purpose of said airbag (214) exiting fast and with low-grade force.

11. Airbag system according to one of the preceding claims,
**characterized**
**in that** said tearing ribbon opening system being designed such that tearing ribbons . (205, 223) are provided with markings being able to be recognized by a sewing machine and leading to assuring the correct position.

12. Airbag system according to one of the preceding claims,
**characterized**
**in that** said tearing ribbon opening system being designed such that tearing ribbons (205, 223) are provided with markings being able to be recognized by a camera system and by which the correct position of the ribbon loops being assured after the final mounting of the ribbon (205, 223).

13. Vehicle seat (S), **characterized by** an airbag system according to one of the preceding claims.

14. Deployment method for an airbag system wherein said airbag system according to one of claims 1 to 13 being operated as intended or as constructed.

## Revendications

1. Ensemble sac gonflable comprenant un module sac gonflable (A ; 230), qui contient une technique d'ouverture d'une couture déchirable (208) d'un revêtement de siège (207) pour un sac gonflable (214) logé de manière invisible sous le revêtement (207), la technique d'ouverture étant conformée de telle sorte que la force de déploiement du sac gonflable (214) perfore la couture déchirable (208) d'un ou de plusieurs trous, provoquant ainsi une ouverture facilitée de la couture déchirable selon le principe de la maille qui file (208), et une bande ou plusieurs bandes (205, 223) ou des extrémités de bande (212) cousues conjointement (couture conjointe 211) avec la couture déchirable (208) du revêtement de siège (207) étant arraché(e)s de la couture par la force de déploiement du sac gonflable à plus d'un endroit en étant entraînées par la force de déploiement du sac gonflable (214),
**caractérisé par le fait que**
un système d'ouverture par bande de rupture est agencé de telle sorte qu'un manchon ouvert (225) est posé autour du module sac gonflable (A ; 230), dont un côté est découpé en une ou plusieurs bandes (223) qui ont la forme de bandes de rupture, et que le système d'ouverture par bande de rupture étant agencé de telle sorte que des perforations (224) sont appliquées sur la face opposée du manchon ouvert (225), à travers lesquelles les bandes de rupture (223) sont passées depuis le côté opposé.

2. Ensemble sac gonflable selon la revendication 1, **caractérisé par le fait que** la bande ou les plusieurs bandes (205, 223) ou les extrémités de bande (212) cousues conjointement avec la couture déchirable (208) du revêtement de siège (207) est/sont arrachées de la couture déchirable (208) à deux endroits séparés en étant entraînées par la force de déploiement du sac gonflable (214).

3. Ensemble sac gonflable selon la revendication 1 ou 2, **caractérisé par le fait que** le module sac gonflable (A ; 230) contient un sac gonflable double (214) ou un sac à deux chambres (201) ou un sac bassin-thorax, qui est conçu pour sortir au niveau d'au moins deux emplacements séparés à travers le revêtement (207) lors du déclenchement du système de sac gonflable.

4. Ensemble sac gonflable selon l'une des revendications précédentes, **caractérisé par le fait que** la bande ou les plusieurs bandes (205) ou extrémités de bande (212) sont un côté d'une bride de rupture (203), qui est posée autour du module sac gonflable (A ; 230).

5. Ensemble sac gonflable selon la revendication 4, **caractérisé par le fait que** la bride de rupture (203) est pourvue à l'extrémité d'une bague de glissement, à travers laquelle est/sont passée(s) la bande (205) à arracher ou les extrémités de bande (212) à arracher.

6. Ensemble sac gonflable selon l'une des revendications précédentes, **caractérisé par le fait que** la bande ou les plusieurs bandes (205, 223) ou extrémités de bande (212) est/sont positionnée(s) de telle sorte qu'il est provoqué un « pelage » de l'extrémité de bande/des extrémités de bande (205, 223, 212).

7. Ensemble sac gonflable selon l'une des revendications précédentes, **caractérisé par le fait que** le(s) pliage(s) (213) du sac gonflable (214) est/sont réalisé(s) de telle sorte que le premier déploiement est dirigé avec sa force sur l'ouverture de la bande de rupture (205, 223).

8. Ensemble sac gonflable selon la revendication 7, **caractérisé par le fait que** le(s) pliage(s) (213) du sac gonflable (214) est/sont réalisé(s) de telle sorte qu'une direction et une vitesse de déploiement ciblées sont en outre atteintes.

9. Ensemble sac gonflable selon l'une des revendications précédentes, **caractérisé par le fait que** le système d'ouverture par bande de rupture est agencé de telle sorte que les bandes de rupture (205, 223) sont cousues avec la couture déchirable (208).

10. Ensemble sac gonflable selon l'une des revendications précédentes, **caractérisé par le fait que** le système d'ouverture par bande de rupture est réalisé en terme de fonction de telle sorte que les bandes de rupture (205, 223) sont mises sous contrainte lors du déploiement du sac gonflable (214) et qu'ainsi les perforations dans la couture déchirable (208) se déchirent dans le but de faire sortir le sac gonflable (214) rapidement et avec une faible application de force.

11. Ensemble sac gonflable selon l'une des revendications précédentes, **caractérisé par le fait que** le système d'ouverture par bande de rupture est agencé de telle sorte que des bandes de rupture (205, 223) sont pourvues de repères qui peuvent être reconnus par une machine à coudre et permettent de garantir la position correcte.

12. Ensemble sac gonflable selon l'une des revendications précédentes, **caractérisé par le fait que** le système d'ouverture par bande de rupture est agencé de telle sorte que des bandes de rupture (205, 223) sont pourvues de repères qui peuvent être reconnus par un système de caméra et avec lesquels la position correcte des brides est garantie après le montage final de la bande (205, 223).

13. Siège de véhicule (S), **caractérisé par** un système sac gonflable selon l'une des revendications précédentes.

14. Procédé de déclenchement pour un ensemble sac gonflable, l'ensemble sac gonflable étant utilisé selon l'une des revendications 1 à 13 conformément à l'usage prévu ou conformément à sa conception.
